# FASCICULE DE BREVET EUROPEEN

(11) **EP 4 010 086 B1**
(45) Date de publication et mention de la délivrance du brevet: **28.01.2026**
(21) Numéro de dépôt: 20760498.4
(22) Date de dépôt: 04.08.2020
(51) Int. Cl.: A62C 2/06, A62C 3/16, E04B 1/94, F16L 57/04

(54) **PROCEDE DE PROTECTION AU FEU PAR ASSEMBLAGE DE COUSSINS DE PROTECTIONS COUPE-FEU**
VERFAHREN ZUM BRANDSCHUTZ DURCH MONTAGE VON FEUERSCHUTZKISSEN
METHOD OF FIRE PROTECTION BY ASSEMBLING FIRESTOP PADS

(30) Priorité: 06.08.2019 FR 1908997
(43) Date de publication de la demande: 15.06.2022
(73) Titulaire: Soletanche Freyssinet, 92500 Rueil Malmaison (FR)
(72) Inventeur: LOUISY, Jérémie, 38110 La Bâtie Montgascon (FR)
(74) Mandataire: Plasseraud IP
(86) Numéro de dépôt international: PCT/FR2020/051434
(87) Numéro de publication internationale: WO 2021/023946

(56) Documents cités:
- EP-A1- 1 590 048
- EP-B1- 1 590 048
- JP-A- 2007 195 365
- JP-A- 2008 215 625
- JP-A- 2009 207 818
- JP-A- 2009 278 736
- JP-U- S57 145 442

## Description

La présente invention concerne un procédé de protection au feu de dispositifs par assemblage de coussins de protections coupe-feu autour desdites structures.

### Domaine technique

L'invention est du domaine de la protection incendie et en particulier de la protection incendie par calfeutrement de dispositifs traversant des locaux, tels que des chemins de câbles électriques, des gaines de ventilation, des tuyauteries, suspendus ou non, par calfeutrement de structures comme des poutres et poutrelles acier, des caissons ou des équipements mécaniques tels que des vannes ou autres ou par calfeutrement de traversées de cloisons.

### Technique antérieure

Les dispositifs suspendus ou cheminant dans les locaux utilisés notamment dans les bâtiments industriels comme par exemple les chemins de câbles électriques sont constitués d'assemblages de berceaux allongés supportant lesdits câbles électriques. Leur protection contre le feu nécessite de les enrober avec un matériau possédant des propriétés coupe-feu. Il en est de même avec les gaines de ventilation ou les tuyauteries regroupées pour cheminer dans des locaux industriels.

Pour ce qui concerne les dispositifs calfeutrement de traversées de cloisons, passages de câbles, tuyauteries entre deux locaux d'un bâtiment, la nécessité d'isoler les locaux les uns des autres en cas de départ de feu conduit à disposer de moyens coupe-feu au niveau de ces traversées de cloisons ce qui se fait généralement en bourrant les trous de traversées avec des matériaux fibreux isolants à la chaleur. Les documents
JP2008215625A, JP2009 278736 A, JP 2009 207818 A et
JP2007 195365 A décrivent notamment des traversées de cloisons avec empilage de coussins pour des chemins de câbles.

Il existe notamment des dispositifs de protection comportant deux demi-coquilles rigides moulées en silicone intumescent. Ces dispositifs constituent toutefois des pièces lourdes, onéreuses et encombrantes à manipuler et ont l'inconvénient de ne proposer qu'une seule taille par dimension de chemin de câble.

L'installation de ces dispositifs n'est pas simple à mettre en œuvre et les protections réalisées sont difficiles à retirer pour intervenir sur les dispositifs protégés ou au niveau des traversées de cloisons.

Il existe aussi des plaques de protection rigides ou souples en fibres minérales avec gel aqueux dont la mise en œuvre reste délicate et la maintenance malaisée.

### Résumé

Au vu de cet art antérieur, l'invention vise à proposer un procédé de réalisation simple de protections au feu d'éléments tels que des éléments suspendus ou cheminant dans des locaux ou de protections au feu de traversées de cloisons au moyen d'un assemblage de moyens de protection tels que des coussins.

Plus précisément la demande concerne l'objet de la revendication indépendante 1.

Avantageusement, lesdits coussins étant munis de bandes auto-agrippantes, au moins certains desdits coussins sont accrochés entre eu au moyens desdites bandes.

Le procédé de l'invention permet un arrangement des coussins adapté à réduire le nombre de ponts thermiques autour de l'élément et d'appliquer les coussins au plus près sur ledit élément tout en limitant le nombre de types de coussins utilisés.

Selon l'invention, on dispose deux couches de coussins en quinconce dans une direction périphérique autour de l'élément.

Selon l'invention, dans le cas où l'élément à protéger est plus long que les coussins, on dispose deux couches de coussins en quinconce dans une direction longitudinale parallèle à l'élément.

L'invention permet de recouvrir les ponts thermiques d'une première couche par des coussins de la seconde couche.

Dans un mode de réalisation particulier, la largeur de base est définie supérieure ou égale à la largeur d'un module de chemin de câble de taille minimale normalisée.

Les coussins étant équipés de bandes auto-agrippantes sur leurs chants on accroche des coussins ensemble chant sur chant pour couvrir la surface de l'élément. Ceci permet de maintenir les coussins entre eux lors de leur application sur l'élément à couvrir.

Avantageusement, le procédé est tel qu'on réalise des assemblages de coussins formant entre eux un angle inférieur à 180° au moyen de bandes flottantes auto-agrippantes à deux segments formant entre eux ledit angle inférieur à 180°. Ceci permet de solidariser des coussins qui ne sont pas alignés tels que des coussins disposés à 90° l'un de l'autre lors du positionnement de la protection. Les segments sont constitués par exemple par deux parties d'une même bande faisant un angle entre elles.

Les bandes flottantes auto-agrippantes peuvent aussi être réalisées en deux parties reliées par une articulation entre elles pour permettre de varier l'inclinaison des coussins entre eux ce qui donne une plus grande latitude pour positionner les coussins au niveau de coins de l'élément par exemple.

Selon un mode de réalisation particulier pour lequel les coussins sont équipés de bandes auto-agrippantes en bordure des faces opposées, on accroche des coussins ensemble chant sur face pour conformer la protection autour de l'élément.

Une fois positionnés, les coussins d'une première couche peuvent être maintenus sur l'élément au moyen de liens rigides tels que des fils de fer, câbles ou bandes de cerclage telles que des colliers métalliques.

Les coussins d'une seconde couche peuvent être maintenus sur la première couche au moyen de liens rigides tels que des fils de fer, des bandes de cerclage ou des colliers métalliques.

Les bandes auto-agrippantes permettent ainsi un pré-positionnement des coussins alors que les liens fils de fer ou câbles ne sont pas encore mis en place.

Selon un mode de réalisation particulier, le procédé permet de réaliser des sections coupe-feu. Pour ce faire, un premier assemblage est réalisé sur une première section d'un dit élément, un second assemblage est réalisé sur une deuxième section dudit élément distante de la première, les premier et deuxième assemblages constituant des écrans anti-propagation d'un feu se déclenchant entre lesdites sections.

La demande concerne en outre un coussin pour la mise en œuvre du procédé décrit ci-dessus qui comporte une housse et une garniture, la housse du coussin étant pourvue de deux grandes faces de tissu opposées reliées ensembles sur trois côtés par un chant réalisé avec une ou plusieurs bandes de tissu et pourvue d'une ouverture sur un quatrième chant et d'un rabat de fermeture prolongeant une des grandes faces pour refermer l'ouverture et former un quatrième chant, l'ouverture permettant de remplir le coussin avec un matériau isolant thermique tel qu'une garniture de protection au feu.

Selon des modes de réalisations alternatifs ou complémentaires, la garniture de protection au feu peut comporter une pièce de matériau d'isolation thermique de dimensions adaptées à remplir l'intérieur du coussin, la garniture de protection au feu peut comporter un matériau actif à action endothermique et/ou la garniture de protection au feu comporte des fibres minérales.

Avantageusement, la housse peut être réalisée en tissu de verre enduit d'un matériau élastomère ou polymère.

Le coussin peut comporter des bandes auto-agrippantes sur ses chants et plus particulièrement peut comporter sur deux premiers chants contigus une bande velours de fixation auto-agrippante et sur deux seconds chants contigus une bande à crochets de fixation auto-agrippante ce qui simplifie l'accrochage des coussins entre eux.

Le coussin peut comporter en périphérie desdites face des bandes velours de fixation auto-agrippantes et/ou des bandes à crochets de fixation auto-agrippantes.

Cette variante permet de se passer de bandes flottantes le cas échéant.

La demande prévoit en outre un assortiment de coussins qui comporte au moins des coussins de largeur 150 mm ±10%, d'épaisseur de 10 mm à 50 mm ±10% et de longueur de 300 mm ±10% à 600 mm ±10% ainsi que des coussins de largeur 300mm ±10%, d'épaisseur de 10 mm à 50 mm ±10% et de longueur de 300 mm ±10% à 600 mm ±10%.

Les coussins de l'invention peuvent en outre être utilisés pour calfeutrer des traversées de cloison par exemple en comblant ces traversées avec ces coussins, voire utiliser ces coussins comme manchons isolants enrubannant un objet traversant (par exemple câbles ou tuyaux) au niveau de la section de traversage (surface où le traversant commence à pénétrer la traversée).

### Brève description des dessins

D'autres caractéristiques, détails et avantages de l'invention apparaîtront à la lecture de la description détaillée ci-après, et à l'analyse des dessins annexés, sur lesquels :
[Fig. 1] est une vue en perspective d'une housse de coussin de la demande ouverte;
[Fig. 2] est une vue de côté de la housse de la figure 1 et d'une garniture;
[Fig. 3] est une vue en perspective d'une housse de coussin de la demande refermée;
[Fig. 4] est une vue de face d'un premier arrangement de coussins sur un premier type de chemin de câbles;
[Fig. 5] est une vue de face d'un deuxième arrangement de coussins sur un deuxième type de chemin de câbles;
[Fig. 6] est une vue de face d'un troisième arrangement de coussins sur un troisième type de chemin de câbles;
[Fig. 7] est une vue de face d'un quatrième arrangement de coussins sur un quatrième type de chemin de câbles;
[Fig. 8] est une vue en perspective d'un arrangement de coussins sur un élément allongé;
[Fig. 9] est une vue en perspective d'un premier exemple d'assemblage de coussins;
[Fig. 10] est une vue en perspective d'un second exemple d'assemblage de coussins;
[Fig. 11] est une vue schématique d'une application particulière de coussins de l'invention.

### Description des modes de réalisation

Les dessins et la description ci-après concernent des exemples de réalisation non limitatifs de l'invention objet de la présente demande.

La protection est constituée d'une ou plusieurs couches d'un assemblage de coussins 10 maintenus sur un élément tel qu'un chemin de câbles mais aussi tout autre élément à protéger comme des poutres, des tuyauteries, des caissons, des passages de cloisons, des équipements mécaniques (par exemple des vannes),... notamment dans un local industriel.

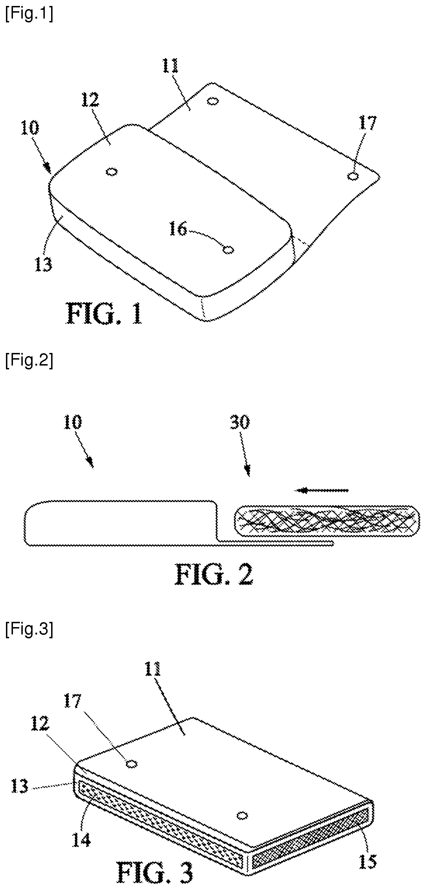

Les coussins sont constitués d'une housse 20 comme représentée en figure 1 en tissu plastique ou composite dé-contaminable et lessivable recouvert d'un enduit de type élastomère ou polymère et notamment un tissu fibre de verre enduit d'un élastomère silicone.

La housse comporte deux grandes faces 12 et des chants 13 sur trois côtés. Une première des grandes faces comporte un rabat 11 refermant une ouverture sur un quatrième côté. Des dispositifs de fixation 16, 17 tels que des boutons pression ou des crochets sur le rabat et la seconde grande face fixent le rabat sur la seconde grande face.

Lorsque le rabat est ouvert il est possible d'introduire ou de retirer une garniture 30 comme représenté en figure 2.

La garniture est constituée d'un produit de protection au feu tel qu'une laine minérale coupe-feu. Une pièce de laine minérale d'épaisseur 38 mm et de densité entre 100 kg/m² et 150 kg/m² et par exemple 128 kg/m² insérée à l'intérieur de la housse est notamment utilisable.

La garniture peut en outre comporter un matelas de gel aqueux encapsulé. Le gel aqueux subit en condition incendie une transformation endothermique renforçant les propriétés coupe-feu de la protection. Le gel aqueux peut comporter un ou plusieurs additifs, en particulier des retardateurs de flamme à décomposition endothermique tels que, par exemple l'hydroxyde d'aluminium ou l'hydroxyde de magnésium. Au lieu du gel aqueux ou en complément la garniture peut comporter une matière solide endothermique en poudre comme un sel de silicate.

Selon la figure 3, les chants sont recouverts d'un système d'accroche de type auto-agrippant avec une bande velours 15 et une bande à crochets 14 comme par exemple les bandes auto-agrippantes connues sous la marque VELCRO.

Les bandes auto-agrippantes d'une largeur de de 30 mm sont cousues sur les flancs ou chants du coussin et arrangées selon un enchainement déterminé - crochet /crochet sur deux premiers flancs successifs puis velours/velours sur deux seconds flancs successifs pour permettre un assemblage optimum des coussins. La partie du rabat formant un chant est recouverte d'une bande auto-agrippante.

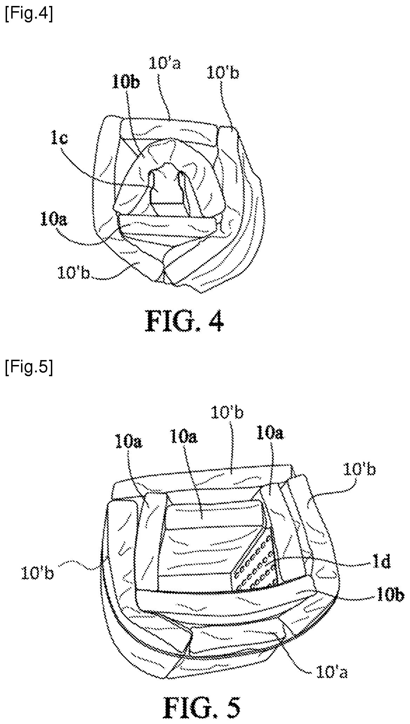

Pour aider à l'assemblage, une couleur est attribuée à chaque type d'attache, par exemple noir pour les bandes à crochets et blanc pour les bandes velours comme représenté aux figures 4 à 7.

La difficulté liée à un mode de protection coupe-feu par assemblage de pièces isolées réside dans la gestion des zones de jonction qui constituent des ponts thermiques pouvant nuire aux propriétés isolantes de la protection. Afin de palier à un manque d'isolation au niveau de ces zones, le procédé prévoit de disposer les coussins sur deux couches en quinconce pour recouvrir les zones de jonctions des coussins d'une première couche par des coussins d'une seconde couche.

Les figures 4 à 7 représentent divers arrangements selon des dimensions variées de chemins de câbles.

Pour réaliser une protection efficace, la demande prévoit deux largeurs de coussins. En effet, il est nécessaire de réduire le nombre de jonctions entre coussins et de s'adapter aux différente tailles de chemins de câbles, la protection de chemins de câbles étant une des applications principales, tout en conservant un nombre de coussins réduit pour ne pas compliquer l'assemblage.

Une première largeur de coussin est définie pour s'adapter au plus petit chemin de câbles normalisé. Pour ce faire, les petits coussins ont une largeur supérieure ou égale à la largeur d'un plus petit chemin de câble normalisé.

Il est aussi possible de prévoir un petit coussin d'une largeur égale à la largeur du plus petit chemin additionnée de deux épaisseurs de coussins pour que ce plus petit coussin disposé sous le chemin de câble comporte des bordures qui dépassent des deux côtés du chemin de câble d'un largeur suffisante pour poser deux coussins verticaux sur ces bordures comme en figure 5 ou pour recevoir les extrémités d'un coussin à cheval sur le chemin de câble comme en figure 4.

Ces coussins sont définis comme coussins de largeur de base.

Une seconde largeur de coussin est le double de la largeur de base et l'assemblage se fait en mixant des coussins de largeur de base et des coussins de largeur double de la largeur de base ce qui permet de recouvrir les éléments au mieux sans multiplier les dimensions de coussins.

La figure 4 illustre un arrangement avec un chemin de câble 1a de taille minimale. Au niveau de la couche interne de coussins, un coussin de largeur de base, ci-après petit coussin 10a, est disposé sous le chemin de câble et dépasse de chaque côté du chemin de câble d'une largeur de coussin. Un coussin de largeur double de la largeur de base, ci-après grand coussin 10b, est positionné au-dessus du chemin de câble et forme un U inversé dont les branches latérales rejoignent les côtés du petit coussin.

Au niveau de la couche externe, un petit coussin 10'a est disposé au-dessus du chemin de câbles et deux grands coussins 10'b sont disposés sur les côtés du chemin de câble et se rejoignent sous le chemin de câble.

Ainsi, les coussins de la couche supérieure sont en décalage de la moitié d'un élément par rapport aux coussins de la couche inférieure dans une direction périmétrique et les coussins sont disposés en quinconce en périphérie de l'élément à protéger constitué par le chemin de câbles.

La figure 5 représente un assemblage sur un chemin de câbles de taille supérieure et, dans ce cas pour la couche inférieure ou interne, un grand coussin 10b est disposé sous le chemin de câbles avec ses extrémités dépassant des deux côtés alors que trois petits coussins 10a sont disposés sur les côtés et au-dessus du chemin de câbles.

La couche externe est alors inversée et comporte un grand coussin 10'b au-dessus, deux grands coussins 10'b sur les côtés et un petit coussin 10'a au-dessous.

Là encore les couches sont disposées en quinconce dans une direction périphérique autour de l'élément pour recouvrir les jonctions des coussins de la couche interne par des coussins de la couche externe.

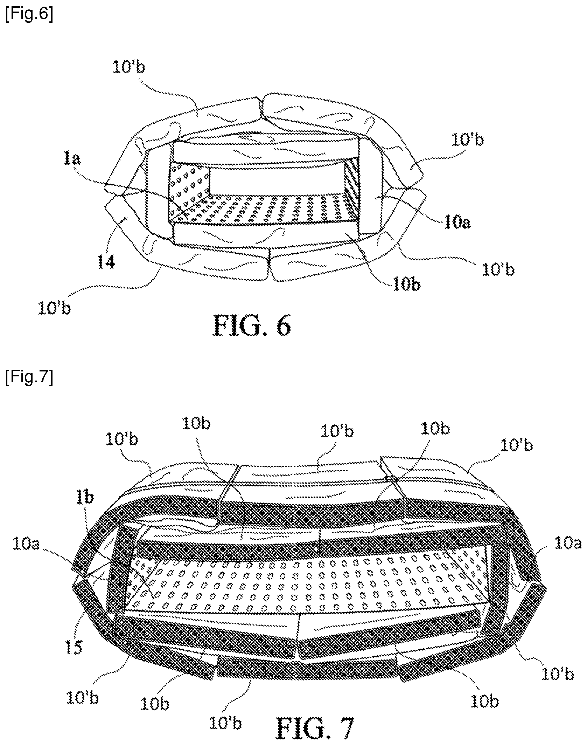

Les figures 6 et 7 correspondent à des chemins de câbles de tailles supérieures croissantes et les coussins de la couche interne comportent deux petits coussins 10a sur les côtés du chemin de câbles et un ou deux grands coussins 10b sur les faces supérieure et inférieure du chemin de câbles alors que la couche externe comporte uniquement des grands coussins 10'b dont des coussins à cheval sur des arêtes entre faces pour là encore réaliser une disposition de coussins en quinconce entre les deux couches.

La figure 6 illustre par ailleurs la présence de bandes à crochets auto-agrippants 14 qui se retrouvent toutes du même côté de l'assemblage alors que la sur figure 7 vue de l'autre côté l'ensemble des bandes comportent des velours 15 de fixation auto-agrippante.

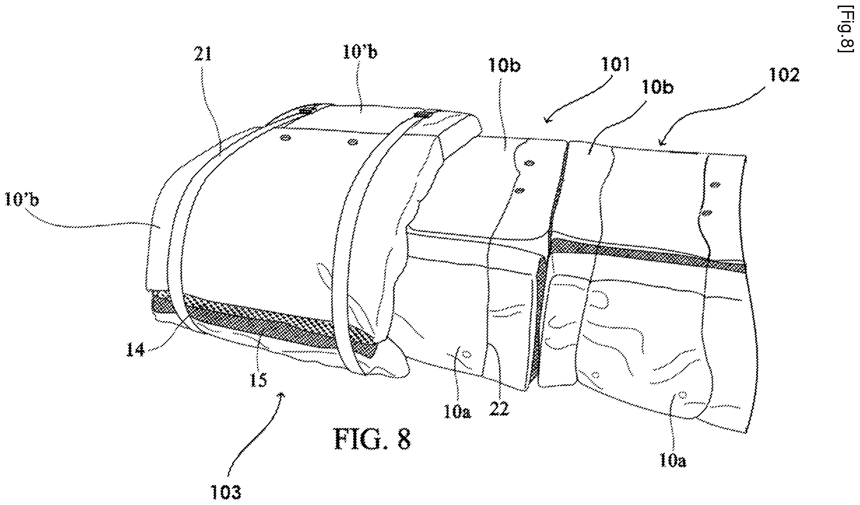

La figure 8 représente un assemblage sur plusieurs tronçon en cours de réalisation pour lequel les tronçons de la couche inférieure 101, 102 sont fixés ensemble par bandes auto-agrippantes et les tronçons de la couche supérieure 103 en décalage de la moitié d'un élément par rapport à la couche inférieure dans une direction longitudinale parallèle à l'élément à recouvrir de sorte que, outre une disposition en quinconce périphérique, l'on dispose deux couches de coussins en quinconce dans une direction longitudinale parallèle à l'élément.

Toujours en référence à la figure 8, les coussins de la première couche sont assemblés à l'aide de liens rigides comme des fils métalliques et notamment des fils de fer 22 alors que les coussins de la seconde couche sont assemblés à l'aide de liens rigides fils de fer ou des colliers métalliques 21 plus robustes pour préserver l'intégrité de l'assemblage en condition incendie du fait que les colliers larges ou les fils plus épais qui sont positionnés côté feu peuvent mieux résister à de hautes températures.

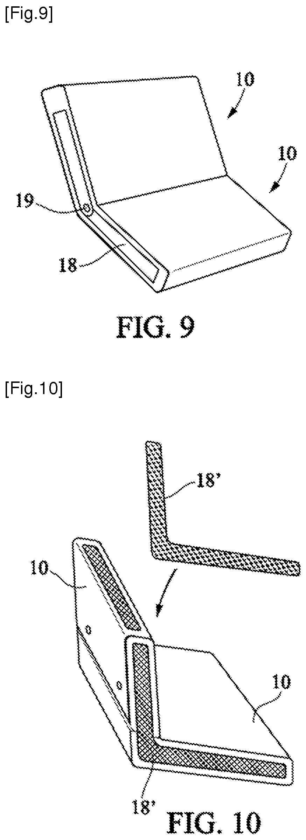

Les figures 9 et 10 illustrent la réalisation de bandes flottantes pouvant servir à tenir des coussins ensemble avant la pose des fils métalliques entourant les coussins.

Dans le cas de la figure 9, la bande flottante est en deux parties 18 reliées par une articulation qui permet de les orienter angulairement l'une par rapport à l'autre et tenir ensemble deux coussins selon une inclinaison variable.

Dans le cas de la figure 10, la bande auto-agrippante comporte deux segments 18' à 90° l'un de l'autre.

L'évaluation et l'optimisation des différentes conceptions de coussins a été permise grâce à la réalisation d'essais feu dans un four de 1m³ contenant une réplique de chemin de câble.

Dans un exemple de réalisation, des housses en tissu se refermant par des boutons pression sont telles qu'une première housse est de forme rectangulaire de 300x150 mm, l'autre est de forme carrée de 300x300 mm. Les coussins rectangulaires peuvent notamment être utilisés au niveau de zones à forte courbure comme les ailes de tablettes, pour remplir des espaces ou protéger des chemins de câble de faibles dimensions.

La solution de protection définie respecte des critères de bonne pratique environnementale :
- peu énergivore,
- non constituée de produits chimiques toxiques pour l'environnement,
- recyclable (housse + laine minérale).

L'ouverture sous le rabat des coussins permet de remplacer le matériau isolant en cas de besoin (dégradation, remplacement par un matériau plus performant) et le système est amovible et peut être monté / démonté indéfiniment.

Le bridage de la protection après montage par un système de colliers résistant au feu permet à la protection de rester en place et d'assurer sa fonction.

Les housses munies sur les 4 côtés de bandes d'accrochage assurent le maintien des autres housses. Les face opposées sont de même nature et permettent ainsi d'assurer l'accrochage des autres housses.

Dans le cadre de la demande, des coussins de tailles supplémentaires peuvent être prévus et à titre d'exemple on peut prévoir des coussins de base de de largeur 150 mm ±10%, d'épaisseur de 10 mm à 50 mm ±10% et de longueur de 300 mm ±10% ; des coussins de largeur double de 300mm ±10%, d'épaisseur de 10 mm à 50 mm ±10% et de longueur de 300 mm ±10% ainsi que des coussins

Des coussins allongés dont la longueur est de 600 mm ±10% peuvent être réalisés pour des chemins de câbles ou autre de grande longueur.

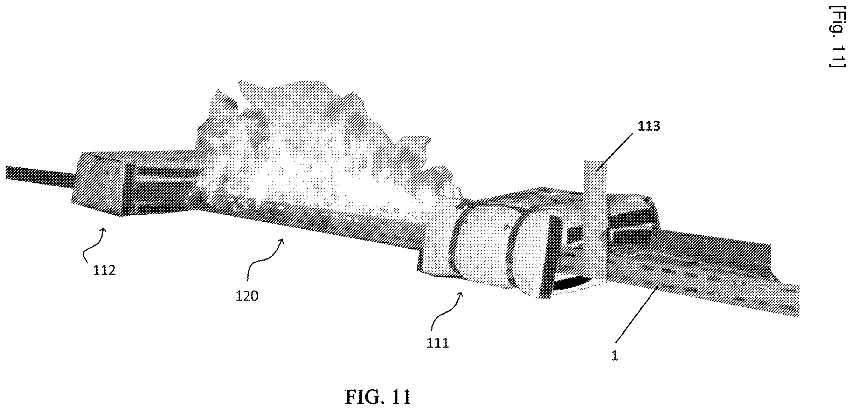

Une utilisation supplémentaire des protections de l'invention représenté en figure 11 consiste à réaliser des sections pare feu comportant un premier assemblage 111 sur une première section d'un élément tel qu'un chemin de câble 1, un second assemblage 112 sur une deuxième section dudit élément, distante de la première, les premier et deuxième assemblages constituant des écrans anti-propagation d'un feu 120 se déclenchant entre lesdites sections. Selon l'exemple le chemin de câbles 1 est suspendu au moyen de montants 113 accrochés par exemple au plafond d'un local.

L'invention n'est pas limitée aux exemples représentés et notamment dans le cas où des éléments de dimensions standardisées particulière sont à recouvrir, les largeurs des coussins de largeur de base et des coussins de largeur double peuvent être revues.

## Revendications

1. Procédé de réalisation de protection au feu d'un élément (1a, 1b, 1c, 1d) ou d'une section d'élément, ledit élément, allongé et suspendu, étant un chemin de câbles électriques, ou une tuyauterie ou une gaine de ventilation, cheminant dans des locaux, caractérisé en ce qu'il comporte un assemblage, autour dudit élément, de moyens de protection au feu dudit élément, constitués par des coussins (10, 10a, 10b, 10'a, 10'b) de forme générale rectangulaire ou carrée, munis d'une housse (20) pourvue de deux faces opposées (12) reliées par des chants (13) et munis d'une garniture interne (30) comportant un matériau isolant thermique pour lequel les coussins, comportant des coussins (10a) de largeur de base et des coussins (10b) de largeur double de la largeur de base, sont arrangés autour dudit élément en mixant des coussins de largeur de base et des coussins de ladite largeur double, pour lequel on maintient les coussins entre eux lors de leur application sur ledit élément à couvrir, pour lequel on dispose deux couches de coussins en quinconce dans une direction périphérique autour dudit élément pour recouvrir les jonctions des coussins, et pour lequel on dispose deux couches de coussins en quinconce dans une direction longitudinale parallèle audit élément pour recouvrir les jonctions des coussins, en sorte de réduire le nombre de ponts thermiques autour dudit élément, d'appliquer les coussins au plus près sur ledit élément tout en limitant le nombre de types de coussins utilisés, de recouvrir les ponts thermiques d'une première couche par des coussins de la seconde couche, le bridage de la protection après montage par un système de colliers résistant au feu permettant à la protection de rester en place et d'assurer sa fonction.

2. Procédé selon la revendication 1, pour lequel ledit élément est un chemin de câbles électriques, et pour lequel la largeur de base est définie supérieure ou égale à la largeur d'un module de chemin de câble de taille minimale normalisée (1a).

3. Procédé selon l'une quelconque des revendications précédentes, pour lequel les coussins étant équipés de bandes auto-agrippantes (14, 15) sur leurs chants on accroche des coussins ensemble chant sur chant pour couvrir la surface de l'élément.

4. Procédé selon la revendication 3, pour lequel on réalise des assemblages de coussins formant entre eux un angle inférieur à 180° au moyen de bandes flottantes (18, 18') auto-agrippantes à deux segments formant entre eux ledit angle inférieur à 180° ou au moyen de bardes flottantes (18, 18') auto- agrippantes en deux parties reliées par une articulation (19) entre elles pour permettre de varier l'inclinaison des coussins entre eux.

5. Procédé selon l'une quelconque des revendications précédentes, pour lequel les coussins étant équipés de bandes auto-agrippantes en bordure des faces opposées on accroche des coussins ensemble chant sur face pour conformer la protection autour de l'élément.

6. Procédé selon l'une quelconque des revendications précédentes, pour lequel les coussins d'une première couche sont maintenus sur l'élément au moyen de liens rigides tels que fils de fer ou câbles (22) ou bandes de cerclage et les coussins d'une seconde couche sur la première couche au moyen de liens rigides tels que fils de fer, bandes de cerclage ou colliers métalliques (21).

7. Procédé selon l'une quelconque des revendications précédentes, pour lequel un premier assemblage est réalisé sur une première section d'un dit élément, un second assemblage est réalisé sur une deuxième section dudit élément, distante de la première, les premier et deuxième assemblages constituant des écrans anti-propagation d'un feu se déclenchant entre lesdites sections.

8. Procédé selon l'une quelconque des revendications précédentes, pour lequel un assortiment de coussins comporte au moins des coussins de largeur 150 mm ±10%, d'épaisseur de 10 mm à 50 mm ±10% et de longueur de 300 mm ±10% à 600 mm ±10% et des coussins de largeur 300mm ±10%, d'épaisseur de 10 mm à 50 mm ±10% et de longueur de 300 mm ±10% à 600 mm ±10%.

## Patentansprüche

1. Verfahren zum Herstellen des Brandschutzes eines Elements (1a, 1b, 1c, 1d) oder eines Elementabschnitts, wobei das Element, das verlängert und aufgehängt ist, ein elektrischer Kabelkanal oder eine Rohrleitung oder ein Lüftungskanal ist, die in Räumen verlaufen, **dadurch gekennzeichnet, dass** es eine Zusammenstellung von Brandschutzmitteln des Elements um das Element herum aufweist, bestehend aus Kissens (10, 10a, 10b, 10'a, 10'b) in allgemeiner rechteckiger oder quadratischer Form, die mit einem Bezug (20) versehen sind, der über zwei gegenüberliegende Seiten (12) verfügt, die durch Kanten (13) verbunden sind und mit einer Innenauskleidung (30) versehen sind, die ein thermisches Isoliermaterial aufweist, wobei die Kissen, die Kissen (10a) mit Grundbreite und Kissen (10b) mit doppelter Breite der Grundbreite aufweisen, um das Element angeordnet sind, indem Kissen mit Grundbreite und Kissen mit doppelter Breite gemischt werden, wobei die Kissen bei dem Anbringen auf dem abzudeckenden Element untereinander gehalten werden, wobei zwei versetzte Kissenschichten in einer Umfangsrichtung um das Element angeordnet sind, um die Kissenverbindungen zu bedecken, und wobei zwei versetzte Kissenschichten in einer Längsrichtung parallel zu dem Element angeordnet sind, um die Kissenverbindungen zu bedecken, so dass die Anzahl der Wärmebrücken um das Element herum reduziert wird, die Kissen so nah wie möglich an das Element angelegt werden und gleichzeitig die Anzahl der verwendeten Kissentypen begrenzt wird, die Wärmebrücken mit einer ersten Schicht mit Kissen der zweiten Schicht abzudecken, wobei der Schutz nach der Montage mit einem feuerfesten Schellensystem befestigt wird, damit der Schutz an Ort und Stelle bleibt und seine Funktion gewährleistet.

2. Verfahren nach Anspruch 1, wobei das Element ein elektrischer Kabelkanal ist und wobei die Grundbreite größer oder gleich der Breite eines Kabelkanalmoduls mit genormter Mindestgröße (1a) definiert ist.

3. Verfahren nach einem der vorhergehenden Ansprüche, wobei die Kissen mit Klettbändern (14, 15) an ihren Kanten ausgestattet sind, wobei Kissen zusammen von Kante zu Kante eingehängt werden, um die Oberfläche des Elements abzudecken.

4. Verfahren nach Anspruch 3, bei dem Kissenbaugruppen hergestellt werden, die einen Winkel von weniger als 180° zueinander bilden, mittels zweisegmentiger selbstklebender Schwimmbänder (18, 18'), die den unteren Winkel von 180° bilden, oder mittels zweiteiliger selbstklebender Schwimmbänder (18, 18'), die durch ein Gelenk (19) miteinander verbunden sind, um die Neigung der Kissen untereinander zu variieren.

5. Verfahren nach einem der vorhergehenden Ansprüche, bei dem die Kissen mit Klettbändern an den Rändern der gegenüberliegenden Seiten ausgestattet sind und Kissen zusammengehängt werden, um den Schutz um das Element herum zu formen.

6. Verfahren nach einem der vorhergehenden Ansprüche, wobei die Kissen einer ersten Schicht mittels starrer Verbindungen wie Eisendrähte oder Kabel (22) oder Umreifungsbänder und die Kissen einer zweiten Schicht auf der ersten Schicht mittels starrer Verbindungen wie Eisendrähte, Umreifungsbänder oder Metallbänder (21) an dem Element gehalten werden.

7. Verfahren nach einem der vorhergehenden Ansprüche, bei dem eine erste Verbindung an einem ersten Abschnitt eines Elements hergestellt wird, eine zweite Verbindung an einem zweiten Abschnitt des Elements hergestellt wird, der von dem ersten entfernt ist, wobei die ersten und zweiten Verbindungen Schutzscheiben gegen die Ausbreitung eines Feuers bilden, das zwischen den Abschnitten ausgelöst wird.

8. Verfahren nach einem der vorhergehenden Ansprüche, wobei ein Kissensortiment mindestens Kissen mit einer Breite von 150 mm ±10 %, einer Dicke von 10 mm bis 50 mm ±10 % und einer Länge von 300 mm ±10 % bis 600 mm ±10 % und Kissen mit einer Breite von 300 mm ±10 %, einer Dicke von 10 mm bis 50 mm ±10 % und einer Länge von 300 mm ±10 % bis 600 mm ±10 % umfasst.

## Claims

1. A method for producing fire protection for an element (1a, 1b, 1c, 1d), or a section of an element, in particular an elongate element such as a cable raceway, piping or a ventilation duct leading into premises or passing through partitions, **characterized in that** it comprises an assembly, around the element, of protection means constituted of pads (10, 10a, 10b, 10'a, 10'b) that are generally rectangular or square in shape, provided with a cover (20) having two opposing faces (12) connected by edges (13) and provided with thermally insulating inner padding (30), for which the pads, comprising pads (10a) with a basic width and pads (10b) with double the width of the basic width, are arranged around the element by mixing pads with a basic width and pads with the double width, in which the pads are held together when affixed on the element to be covered, wherein two layers of pads are arranged so as to be staggered in a peripheral direction around the element to cover the junctions of the pads in order to reduce the number of thermal bridges around the elements and apply the pads as closely as possible to the element while limiting the number of pads to be used, to cover thermal bridges of a first layer with pads of the second layer, the fastening of the protection after assembly being provided by a fire resistant collar system allowing the protection to stay in place and ensure its function.

2. The method as claimed in claim 1, wherein said element is an electrical cable raceway, and for which the base width is defined greater and equal to the widthe of a minimum size normalized raceway (1a).

3. The method as claimed in any one of the preceding claims, wherein the pads being provided with hook-and-loop strips (14, 15) on the edges thereof, the pads are fastened together edge-to-edge in order to cover the surface of the element.

4. The method as claimed in claim 2, wherein pad assemblies, forming therebetween an angle of less than 180°, are produced by means of floating hook-and-loop strips (18, 18') which have two segments forming therebetween said angle of less than 180°, or by means of floating hook-and-loop strips (18, 18') in two parts which are connected together by an articulation (19) to permit the inclination of the pads to be varied relative to one another.

5. The method as claimed in any one of the preceding claims, wherein the pads, being provided with hook-and-loop strips on the edge of the opposing faces, are fastened together edge-to-face in order to shape the protection around the element.

6. The method as claimed in any one of the preceding claims, wherein the pads of a first layer are held on the element by means of rigid connections such as iron wires or cables (22) or strapping bands and the pads of a second layer are held on the first layer by means of rigid connections such as iron wires, strapping bands or metal collars (21).

7. The method as claimed in any one of the preceding claims, wherein a first assembly is produced on a first section of said one element, a second assembly is produced on a second section of said element, remote from the first, the first and second assemblies constituting anti-fire propagation screens for a fire starting between said sections.

8. The method as claimed in any one of the preceding claims, wherein a pad set comprises at least pads having a width of 150 mm ±10%, having a thickness of 10 mm to 50 mm ±10% and having a length of 300 mm ±10% to 600 mm ±10% and pads having a width of 300 mm ±10%, having a thickness of 10 mm to 50 mm ±10% and having a length of 300 mm ±10% to 600 mm ±10%.
